# EUROPEAN PATENT SPECIFICATION

(11) **EP 3 320 334 B1**
(45) Date of publication and mention of the grant of the patent: **31.08.2022**
(21) Application number: 16739656.3
(22) Date of filing: 06.07.2016
(51) Int. Cl.: G01N 29/04, G01M 17/10, G01N 29/22, G01N 29/26, G01N 29/27, G01N 29/28

(54) **METHOD AND SYSTEM FOR INSPECTING A RAIL WHEEL WITH PHASED ARRAY PROBES**
VERFAHREN UND VORRICHTUNG ZUR INSPEKTION EINES EISENBAHNRADES MIT GRUPPENSTRAHLERN
PROCÉDÉ ET DISPOSITIF POUR L'INSPECTION D'UNE ROUE DE CHEMIN DE FER AVEC DES RÉSEAUX EN PHASE

(30) Priority: 07.07.2015 US 201562189433 P
(43) Date of publication of application: 16.05.2018
(73) Proprietor: General Electric Company, Schenectady, NY 12345 (US)
(72) Inventor: FRANZEN, Andreas, 50354 Huerth (DE); HENRIX, Frank, 50354 Huerth (DE)
(74) Representative: Novagraaf Group
(86) International application number: PCT/US2016/041141
(87) International publication number: WO 2017/007822

(56) References cited:
- EP-A1- 2 538 211
- WO-A1-00/08459

## Description

### BACKGROUND

The subject matter disclosed herein relates to systems and methods for inspecting a rail wheel with a phased array probe, including inspecting a web portion and/or a hub portion of the rail wheel.

Nondestructive testing devices can be used to inspect test objects to detect and analyze anomalies in the objects. Nondestructive testing typically involves placing one or more probes on the surface of the test object in order to perform testing of the underlying structure. One method of nondestructive testing employs ultrasonic acoustic waves.

WO 00/08459 A1 discloses a device for detecting a crack in a railway wheel. A group of emitters are stationary with respect to the axis of rotation of a railway wheel.

Generally, an ultrasonic testing system includes an ultrasonic probe for transmitting and receiving ultrasonic acoustic waves to and from a test object, and a probe cable for connecting the ultrasonic probe to an ultrasonic test unit that includes a display for viewing the test results. In an ultrasonic testing system, electrical pulses are fed from the ultrasonic test unit to an ultrasonic probe where they are transformed into acoustic pulses by one or more ultrasonic transducers (e.g., piezoelectric elements) in the ultrasonic probe. During operation, electrical pulses are applied to the electrodes of one or more ultrasonic transducers, thus generating ultrasonic acoustic waves that are transmitted to the test object to which the probe is coupled. Conversely, when an ultrasonic acoustic wave is reflected from the test object and contacts the surface of the ultrasonic transducer(s), it causes the transducer(s) to vibrate, generating a voltage that is detected as a receive signal by the ultrasonic test unit. As the ultrasonic acoustic waves pass through the test object, various reflections, called echoes, occur as the ultrasonic acoustic waves interact with anomalies within the test object.

When inspecting an object with a conventional, single element ultrasonic probe, the location and orientation of the ultrasonic probe is changed several times to inspect different regions of the object. In order to inspect the full volume of the object, it may be necessary to scan the object dozens of times at different angles and locations, each time relocating and reorienting the ultrasonic probe, which can be time consuming.

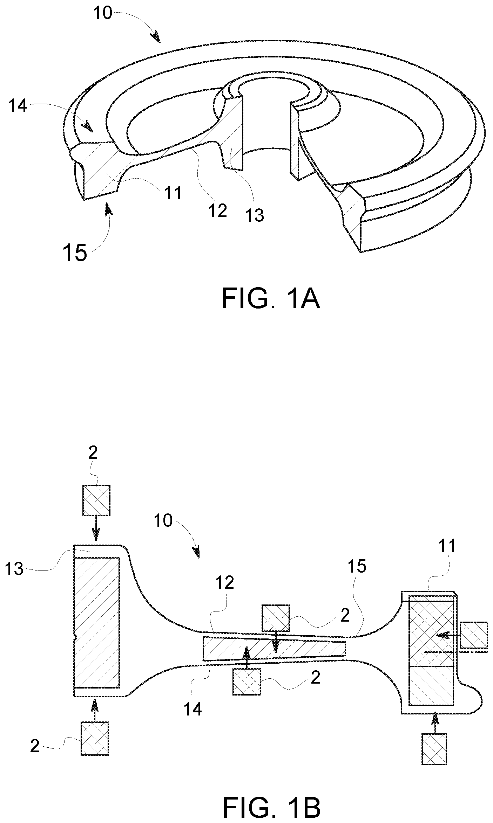

For example, ultrasonic inspecting is currently used to inspect a rail wheel 10 for volumetric flaws (e.g., flat bottom holes). As shown in FIGS. 1A and 1B, the rail wheel 10 includes a rim 11, a hub 13, and a web 12 connecting the rim 11 and the hub 13. The rail wheel 10 has an inside surface 14 and an outside surface 15. Several standard inspection requirements for rail wheels (e.g., DIN EN 13262) require inspection of the rim 11 (radial and axial inspection), web 12, and hub 13 from both sides of the rail wheel 10 and with straight beam scanning, where the ultrasonic acoustic wave contacts the surface of the rail wheel 10 at the inspection location normal to the surface. As shown in FIG. 1B, in order to adequately inspect the rim 11, web 12, and hub 13 of the rail wheel 10, a number of conventional, single element ultrasonic probes must be used and must be relocated and/or reoriented dozens of times to cover the test areas, requiring dozens of scans, which takes a significant amount of time. Each scan often requires a complete rotation of the rail wheel 10. The inspection of the web 12 of the rail wheel 10 requires a significant amount of repositioning given the length and the varying surface angles of the web 12.

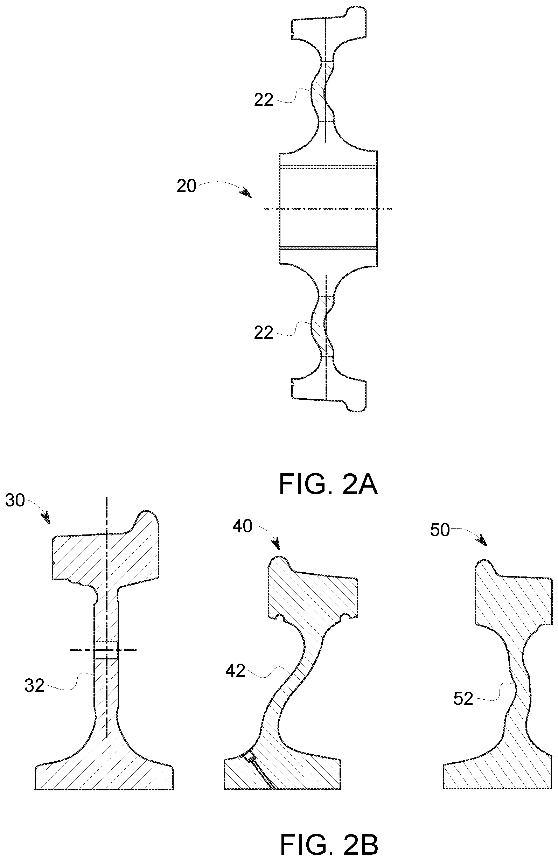

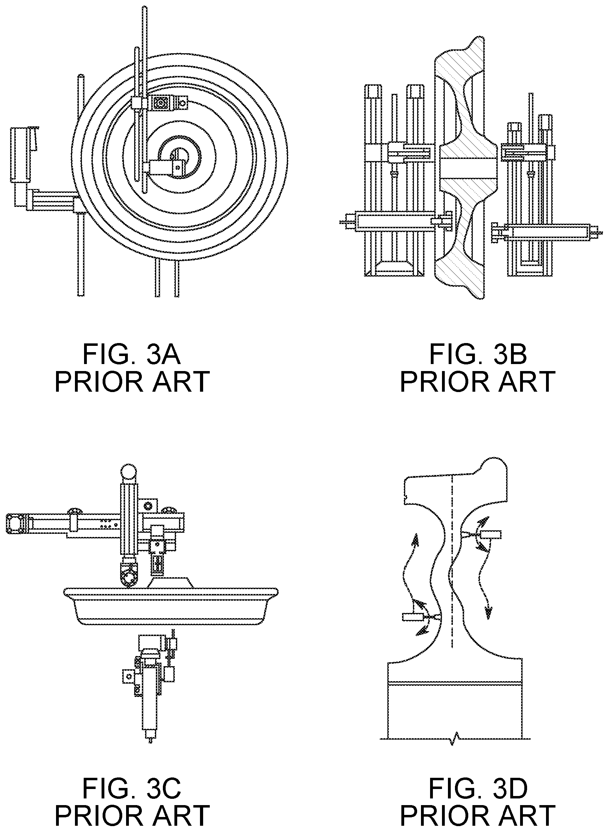

Furthermore, as shown in FIGS. 2A and 2B, since different rail wheels 20, 30, 40, 50 have widely differing designs and geometries for the web 22, 32, 42, 52, any inspection system requires significant flexible ultrasonic probe positioning to inspect the web 22, 32, 42, 52, especially when straight beam scanning is required. One existing solution for inspecting a web 22, 32, 42, 52 and hub is to use a complex manipulator as shown in FIGS. 3A-3D, to adjust the locations and orientations of the conventional, single element ultrasonic probes along the surface of the web 22, 32, 42, 52 and hub. Even with automated manipulating, this inspection with a conventional, single element ultrasonic probe will often require dozens of complete rotations of the rail wheel and therefore take a substantial amount of time to completely inspect a web and hub of a rail wheel, often longer than the production time for the rail wheel itself, creating a manufacturing bottleneck and slowing production times. This lengthy inspection time is particularly problematic as newer standards (e.g., DIN EN 13262) for inspection require higher percentages of rail wheels, including webs, to be inspected on a particular production cycle (e.g., some manufacturers require one hundred percent inspection).

### SUMMARY

The present invention is defined in the accompanying claims. A method and system for inspecting the web and hub of a rail wheel with a phased array probe is disclosed.

According to the invention, the system includes opposing phased array probes for inspecting opposite sides of the rail wheel and automated arms for moving the opposing phased array probes to inspect the multiple annular portions of the rail wheel. The opposing phased array probes are configured to have multiple radial positions for inspecting multiple annular portions of the rail wheel including the web portion upon rotation of the rail wheel. The automated arms are configured to move the opposing phased array probes along tracks with the multiple radial positions.

According to the invention, opposite sides of the rail wheel are inspected with opposing phased array probes. Each of the opposing phased array probes is moved along a corresponding radial track with multiple radial positions. The rail wheel is rotated to inspect annular portions of the rail wheel including the web portion with the opposing phased array probes. The annular portions correspond to the multiple radial positions.

An advantage that may be realized in the practice of some of the disclosed embodiments for inspecting the web and hub of a rail wheel with a phased array probe is reduced inspection times based on the reduced number of scans required to fully inspect the web and hub of the rail wheel.

The above embodiments are exemplary only. Other embodiments are within the scope of the appended claims.

### BRIEF DESCRIPTION OF THE SEVERAL VIEWS OF THE DRAWINGS

So that the manner in which the features of the invention can be understood, a detailed description of the invention may be had by reference to certain embodiments, some of which are illustrated in the accompanying drawings. It is to be noted, however, that the drawings illustrate only certain embodiments of this invention and are therefore not to be considered limiting of its scope, for the scope of the disclosed subject matter encompasses other embodiments as well. The drawings are not necessarily to scale, emphasis generally being placed upon illustrating the features of certain embodiments of the invention. In the drawings, like numerals are used to indicate like parts throughout the various views.
FIG. 1A is a partial cross-section view of an exemplary rail wheel, showing the rim, web, and hub of the rail wheel;
FIG. 1B is cross-section view of an exemplary rail wheel, showing the rim, web, and hub of the rail wheel along with a plurality of conventional, single element ultrasonic probes used to inspect the rail wheel at multiple locations / testing areas;
FIGS. 2A and 2B are cross-section views of exemplary rail wheels showing a plurality of different designs and geometries for the webs of the rail wheels;
FIGS. 3A and 3B are a front view and section view of a convention hub inspection system, while FIGS. 3C and 3D are a top view and concept view of a conventional web inspection system. Each system has manipulators to adjust the locations and orientations of the conventional, single element ultrasonic probes along the surface of the web and hub of a rail wheel;
FIGS. 4A and 4B are a side view and a front view, respectively, of an exemplary inspection system for inspecting the web and hub of a rail wheel with a pair of phased array probes;
FIG. 5 is a cross-section view of an exemplary inspection system for inspecting the web of a rail wheel with a pair of phased array probes, showing a plurality of positions (tracks) for each of the probes to scan all parts of the web by the virtual probes of the phased array probes;
FIGS. 6A and 6B illustrate of an exemplary steering range of an ultrasonic beam from a phased array probe positioned relative to the web of the rail wheel and a curved, circular surface, respectively;
FIGS. 7A, 7B, and 7C are exemplary images from CIVA modeling of an exemplary phased array probe positioned adjacent to the inside surface of a rail wheel in a first inside position;
FIGS. 8A and 8B illustrate an exemplary phased array probe positioned adjacent to the outside surface of a rail wheel in a first outside position (track 1B) along with an analysis to determine the number of positions (tracks) required to cover all parts of the web by the virtual probes of the phased array probe;
FIG. 9A illustrates an exemplary analysis to determine the number of positions (tracks) and the time required to cover all parts of the web by the virtual probes of the phased array probe of FIGS. 8A and 8B;
FIG. 9B illustrates an exemplary analysis to determine the number of positions (tracks) and the time required to cover all parts of the web of FIGS. 8A and 8B by a conventional, single element ultrasonic probe;
FIGS. 10A and 10B are a side cross-section view and a front cross-section view, respectively, of an exemplary inspection system for inspecting the web and hub of a rail wheel with a pair of phased array probes, with the rail wheel and phased array probes supported by an exemplary gantry system;
FIGS. 11 is a perspective view of an exemplary inspection system for inspecting the web and hub of a rail wheel with a pair of phased array probes, with the rail wheel and phased array probes supported by an exemplary gantry system;
FIGS. 12A and 12B are a side view and a cross-section view, respectively, of the exemplary inspection system for inspecting the web and hub of a rail wheel with a pair of phased array probes of FIG. 11;
FIGS. 13A and 13B are a side view and side perspective view of the exemplary gantry system of FIG. 11 for inspecting the web and hub of a rail wheel with a pair of phased array probes;
FIG. 14 is a top view of the exemplary inspection system for inspecting the web and hub of a rail wheel with a pair of phased array probes of FIG. 11; and
FIG. 15 is an exemplary circuit diagram of an exemplary inspection system for inspecting the web and hub of a rail wheel with a pair of phased array probes.

### DETAILED DESCRIPTION

The present disclosure provides, in part, systems and methods for inspecting a rail wheel. For example, a phased array probe is positioned at one of multiple radial positions with respect to the rail wheel. The rail wheel is rotated and the phased array probe inspects a portion of the rotating rail wheel at the radial position. The method may be repeated with the same probe and/or additional probes at different radial positions or different sides of the rail wheel to inspect more portions of the rail wheel. Other embodiments are within the scope of the disclosed subject matter.

By way of example, in one embodiment, a first phased array probe is positioned adjacent to the inside surface of the rail wheel in a first inside position (*i*.*e.,* track 1A) and a second phased array probe is positioned adjacent to the outside surface of the rail wheel in a first outside position (*i*.*e*., track 1B). As the rail wheel is rotated, virtual probes (*e.g*., different groups of ultrasonic transducer elements) of the web phased array probes scan a first part of the web that can be covered by the phased array probes in the first inside position and the first outside position. The first phased array probe adjacent to the inside surface of the rail wheel is repositioned in a second inside position (*i.e*., track 2A) and the second phased array probe adjacent to the outside surface of the rail wheel is repositioned in a second outside position *(i.e.,* track 2B) As the rail wheel is rotated, virtual probes (*e.g.*, different groups of ultrasonic transducer elements) of the web phased array probes scan a second part of the web that can be covered by the phased array probes in the second inside position and the second outside position. This repositioning continues until all parts of the web are scanned by the virtual probes of the first phased array probe and the second phased array probe, operating on both sides of the rail wheel.

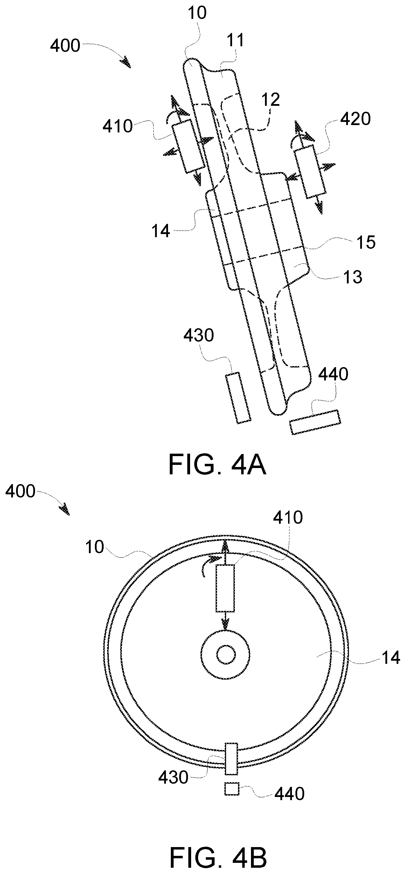

FIGS. 4A and 4B are a side view and a front view, respectively, of an exemplary inspection system 400 for inspecting the web 12 of a rail wheel 10 for, e.g., volumetric flaws (e.g., flat bottom holes), with a pair of web phased array probes 410, 420. A phased array probe has a plurality of electrically and acoustically independent ultrasonic transducers mounted in a single housing. By varying the timing of the electrical pulses applied to the ultrasonic transducers and/or which transducers are activated, a phased array ultrasonic probe physically oriented at a single angle can generate ultrasonic beams (virtual probes) at different angles, allowing the phased array ultrasonic probe to steer the ultrasonic beam at different angles through the test object to try to detect anomalies. The ultrasonic waves received at the various angles can be processed to produce a projection view or a time displacement view (or TD-Scan) image of the test object, allowing visual identification of any anomalies. Thus, from a single position, a single phased array probe can scan a large portion of an object under inspection, whereas a conventional ultrasonic probe may only scan a small portion of the object.

The first web phased array probe 410 can be positioned adjacent to the inside surface 14 of the rail wheel 10 and the second web phased array probe 420 can be positioned adjacent to the outside surface 15 of the rail wheel 10, *e.g*., in opposing relation to the first web phased array probe 410. In one embodiment, the first web phased array probe 410 can be positioned asymmetrically with the second web phased array probe 420 to ensure that the two probes 410, 420 do not affect each other. For example, if the two probes 410, 420 were disposed directly across from each other, ultrasonic signals from one could interfere with the other, thus reducing the signal to noise ratio of the probes. As shown in FIGS. 4A and 4B, the web phased array probes 410, 420 can be configured to also inspect the hub 13 of the rail wheel 10 in addition to the web 12, reducing the number of probes required to perform a completed inspection of the rail wheel 10. The inspection system 400 can also include a first rim phased array probe 430 for conducting an axial inspection of the rim 11 and a second rim phased array probe 440 for conducting a radial inspection of the rim 11. In one embodiment, the first rim phased array probe 430 can be located adjacent to the inside surface 14 of the rail wheel 10. In one exemplary embodiment, the web phased array probes 410, 420 can include 64 transducer elements and the rim phased array probes 430, 440 can include 128 transducer elements.

As the rail wheel 10 is rotated, virtual probes of the web phased array probes 410, 420 scan a first part of the web 12 that can be covered by the web phased array probes 410, 420. For example, the first part may have an annular shape due to rotation of the rail wheel 10. As illustrated in FIGS. 4A and 4B, the web phased array probes 410, 420 can be relocated/repositioned and reoriented by an automated manipulator arm to cover different parts of the web 12. For example, the web phased array probes 410, 420 can be translated radially with respect to the rail wheel 10 and/or rotated at a given position so that the probes are aimed at different portions of the rail wheel 410.

Although not shown in FIGS. 4A and 4B, the phased array probes 410, 420, 430, 440 and the rail wheel 10 are immersed in a liquid (e.g., water) in a tank to allow non-contact type, immersion inspection of the rail wheel 10 by the probes 410, 420, 430, 440 through the liquid.

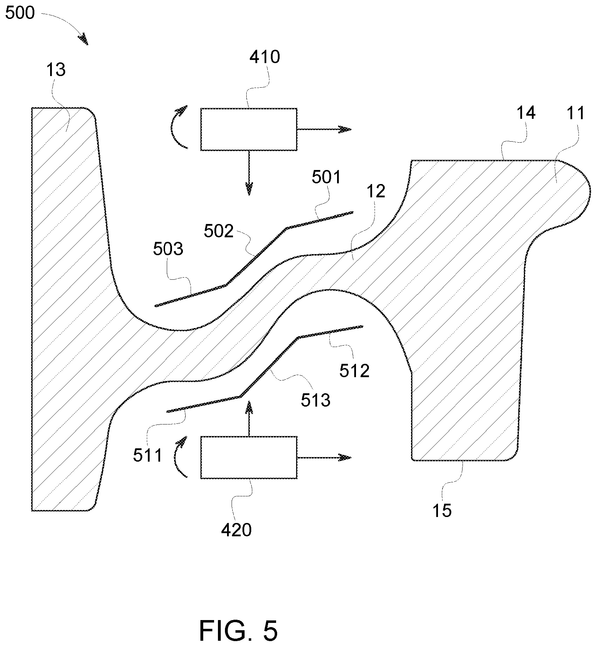

FIG. 5 is a cross-section view of an exemplary inspection system 500 for inspecting the web 12 of a rail wheel 10 with a pair of phased array probes, showing a plurality of positions (tracks) 501-503, 511-513 for each of the probes to scan all parts of the web 12 by the virtual probes of the phased array probes. For illustrative purposes, the first web phased array probe 410 is shown positioned adjacent to the inside surface 14 of the rail wheel 10, while the second web phased array probe 420 is shown positioned adjacent to the outside surface 15 of the rail wheel 10. As described above, although not shown in FIG. 5, the web phased array probes 410, 420 and the rail wheel 10 are immersed in a liquid (e.g., water) in a tank to allow non-contact type, immersion inspection of the rail wheel 10 by the probes 410, 420 through the liquid.

As shown in FIG. 5, in one embodiment, the first web phased array probe 410 can be positioned adjacent to the inside surface 14 of the rail wheel 10 in a first inside position (track 1A) 501 and a second web phased array probe 420 can be positioned adjacent to the outside surface 15 of the rail wheel 10 in a first outside position (track 1B) 511. As the rail wheel 10 is rotated, virtual probes of the web phased array probes 410, 420 scan a first part of the web 12 that can be covered by the web phased array probes 410, 420 in the first inside position 501 and the first outside position 511. After the scan is complete at the first positions 501, 511, the first web phased array probe 410 adjacent to the inside surface 14 of the rail wheel 10 can be repositioned in a second inside position (track 2A) 502 and the second web phased array probe 420 adjacent to the outside surface 15 of the rail wheel 10 is repositioned in a second outside position (track 2B) 512. As the rail wheel 10 is rotated, virtual probes of the web phased array probes 410, 420 scan a second part of the web 12 that can be covered by the web phased array probes 410, 420 in the second inside position 502 and the second outside position 512. After the scan is complete at the second positions 502, 512, the first web phased array probe 410 adjacent to the inside surface 14 of the rail wheel 10 can be repositioned in a third inside position (track 3A) 503 and the second web phased array probe 420 adjacent to the outside surface 15 of the rail wheel 10 is repositioned in a third outside position (track 3B) 513. As the rail wheel 10 is rotated, virtual probes of the web phased array probes 410, 420 scan a third part of the web 12 that can be covered by the web phased array probes 410, 420 in the third inside position 503 and the third outside position 513. This repositioning continues until all parts of the web 12 are scanned by the virtual probes of the first web phased array probe 410 and the second web phased array probe 420. As shown in FIGS. 4A, 4B, and 5, in one exemplary embodiment, the tracks for each web phased array probe 410, 420 can be positioned in three axes to control the distance to the surface and the height from the flange and the angle. Also, the three pairs of tracks noted above can be disposed asymmetrically with respect to the rail wheel 10, to prevent cross-interference from the two probes 410, 420.

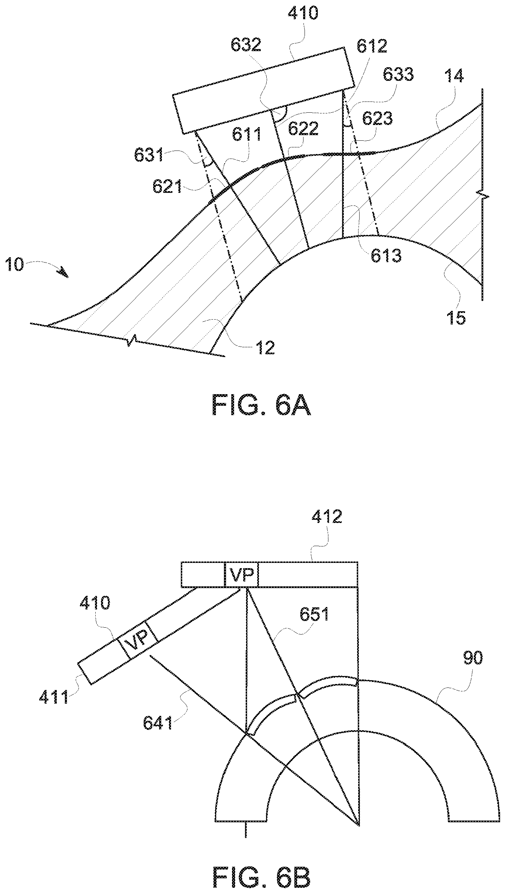

FIGS. 6A and 6B are illustrations of an exemplary steering range of an ultrasonic beam from a phased array probe 410 positioned relative to the web 12 of the rail wheel 10 and a curved, circular surface 90, respectively. As described above, although not shown in FIGS. 6A and 6B, the phased array probe 410 and the rail wheel 10 and curved, circular surface 90 are immersed in a liquid (e.g., water) in a tank to allow non-contact type, immersion inspection by the probe 410 through the liquid. As shown in FIG. 6A, in order to conduct straight beam scanning, the ultrasonic beams (virtual probes) can be optimized by steering to contact the inner surface 14 of the web 12 of the rail wheel 10 normal to the surface 14. For example, the center virtual probe 612 transmitted at a center virtual probe angle 632 (e.g., 0 degrees) forms a perpendicular angle with the inner surface 622 of the web 12 at a center location. Similarly, the first virtual probe 611 transmitted at a first virtual probe angle 631 forms a perpendicular angle with the inner surface 621 of the web 12 at a first location, and the last virtual probe 613 transmitted at a last virtual probe angle 633 forms a perpendicular angle with the inner surface 623 of the web 12 at a last location. As can be seen in FIG. 6A, in order to conduct straight beam scanning with the phased array probe 410 positioned as shown in FIG. 6A, virtual probes of the phased array probe 410 can only scan the part of the web 12 between the first virtual probe 611 and the last virtual probe 613. The amount of coverage of the web 12 is dependent, e.g., on the shape (e..g, curvature) of the web 12, the width of the phased array probe 410 and the distance between the phased array probe 410 and the surface 14 of the web 12. This wider testing track per wheel rotation reduces the number of scans required and the number of times the rail wheel 10 needs to be rotated, reducing the inspection time. To scan a part of the web 12 outside of that area requires repositioning of the phased array probe 410.

As shown in FIG. 6B, in one exemplary embodiment, the ultrasonic beams (virtual probes) 641, 651 from the phased array probe 410 can be steered between -α degrees and + α degrees (e.g., -25 degrees and +25 degrees) in the water for a linear array. Outside of this range, the transmission of the wave field energy into, e.g., steel is reduced. Accordingly, in one exemplary embodiment, the phased array probe 410 can be rotated from a first position 411 to a second position 412 after covering every 25 degrees of the circular part of the geometry of the test object 90.

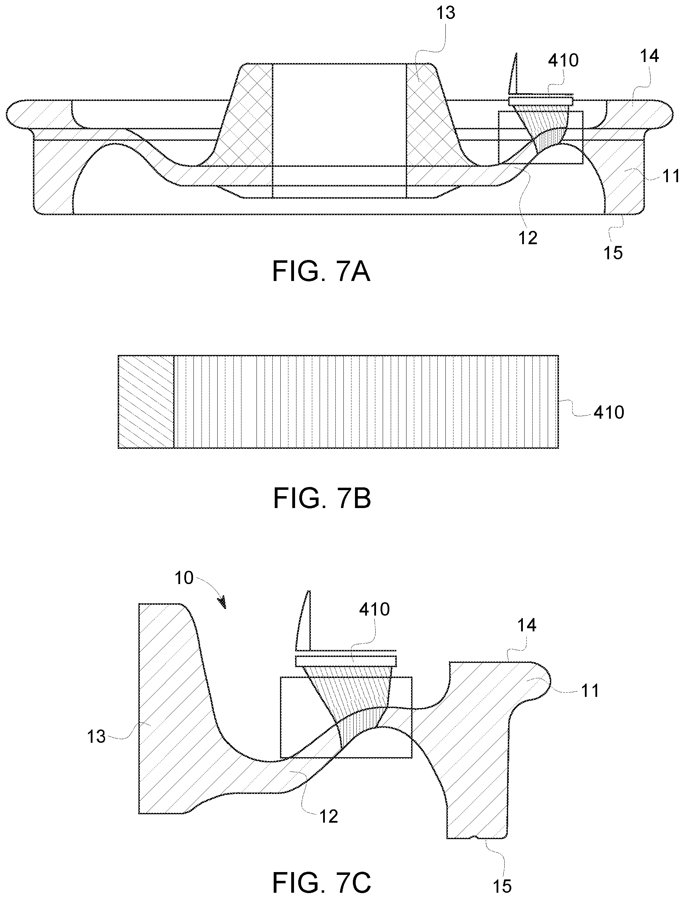

FIGS. 7A, 7B, and 7C are exemplary images from CIVA modeling of an exemplary phased array probe 410 positioned adjacent to the inside surface 14 of a rail wheel 10 in a first inside position (track 1A) 501 (FIG. 5). Based on the CIVA modeling, but in no way restricting the scope of the invention, for one exemplary embodiment of the inspection system of FIGS. 4A and 4B, the system was designed wherein the web phased array probes 410, 420 had a center frequency of 4 MHz, with 128 transducer elements, and a pitch of 0.6 mm. In addition, the water path between the web phased array probes 410, 420 and the surface of the inspected surface was in the range of 40 mm to 60 mm for the web inspection and 20 mm to 25 mm for the hub inspection. The CIVA modeling also indicated that the optimal number of transducer elements of a virtual transducer is 16 for the web and 42 elements for the hub. Finally, the CIVA modeling also indicated that defects in a curved area with a wall thickness between 16 mm and 40 mm could be detected with the specified design incorporating the web phased array probes 410, 420. In one example, the rail wheel may be analyzed using these methods, so that defects within the rail wheel may be revealed. For example, a rail wheel may include a cavity, an abrasion, or an extra defective portion, and the methods disclosed herein can detect such a defect so that corrective measures may be taken. In addition, the data may be used to set up the correct system parameters.

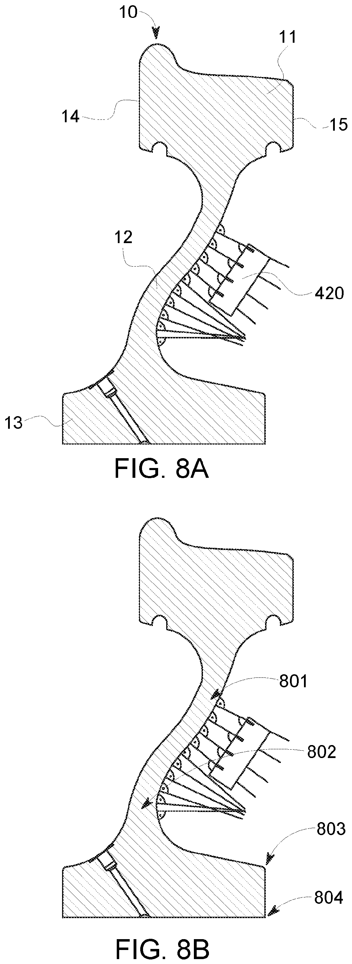

FIGS. 8A-9B provide a comparison between conventional approaches and the present method. FIGS. 8A and 8B illustrate an exemplary phased array probe 420 positioned adjacent to the outside surface 15 of a rail wheel 10 in a first outside position (track 1B) 511 (FIG. 5) along with an analysis (see Table 1 below) to determine the number of positions (tracks) required to cover all parts of the web 12 by the virtual probes of the phased array probe 420. For the exemplary rail wheel 1 0, use of the phased array probe 420 allowed the entire web 12 to be inspected using a total of 5 tracks, thereby only requiring 5 rotations of the rail wheel to completely inspect the web 12.

**TABLE 1 - FIG. 8B Exemplary Analysis**

| **Testing Area** | | |
|---|---|---|
| Web Radius max 801 | 380.00 mm | |
| Web Radius min 802 | 135.00 mm | |
| Size of test area | 245.00 mm | |
| Hub Radius max 803 | 137.00 mm | |
| Hub Radius min 804 | 93.00 mm | |
| Size of test area | 44.00 mm | |

| **Field of Sound** | Phased Array | Conventional |
|---|---|---|
| Diameter of Sound - 3dB | 5.00 mm | 10.00 mm |
| Overlap of Sound fields | 50% | 50% |
| Step size | 2.50 mm | 5.00 mm |
| Testing tracks on web | 98 | 49 |
| **Probe** | | |
| Elements | 128 | |
| Pitch | 0.600 mm | |
| Aperture | 32 | |
| Step | 2 | |
| Max amount of virtual probes | 48 | |
| Active probe width | 57.60 mm | |
| Required amount of tracks | 5 | |
| Max amount of virtual probes | 240 | |
| Max amount of virtual probes per track | 2.45 | |
| Changeover time | 10.00 s | 5.00 s |
| **Mechanics** | | |
| Max wheel speed | 5.00 rpm | |

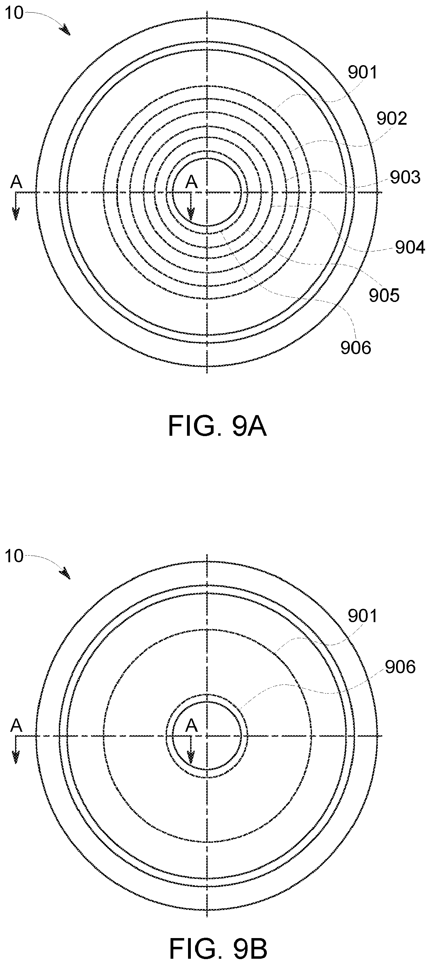

Continuing with the example, FIG. 9A illustrates an exemplary analysis to determine the number of positions (tracks) and the time required to cover all parts of the web 12 by the virtual probes of the phased array probe 420 of FIGS. 8A and 8B. FIG. 9B illustrates an exemplary analysis to determine the number of positions (tracks) and the time required to cover all parts of the web 12 of FIGS. 8A and 8B by a conventional, single element ultrasonic probe. As shown in Table 2 below, including changeover time between tracks, the phased array probe 420 took 2.41 minutes to complete the inspection of the web 12 with its 5 scans and 5 rotations of the rail wheel 10. As shown in Table 3 below, the conventional, single element ultrasonic probe took 13.8 minutes to complete the inspection of the web 12 with its 49 scans and 49 rotations of the rail wheel 10.

The reduction in time is due to the ability of the present method to analyze 5 annular portions 901-906 in 5 rotations to scan the entire wheel, rather than making 49 rotations of the wheel and repositioning of sensors to accomplish the scan.

**TABLE 2 - FIG. 9A Exemplary Analysis**

| | |
|---|---|
| **Virtual probes / probes** | 48 |
| **Serial shots / Probe** | 48 |
| **Duration of step table** | 24.00 ms |
| **Annular Portion 901** | 2387.61 mm |
| Shots on track | 956 |
| Testing time on track | 22.94 s |
| Changeover to next track | 10.00 s |
| **Annular Portion 902** | 2025.70 mm |
| Shots on track | 811 |
| Testing time on track | 19.46 s |
| Changeover to next track | 10.00 s |
| **Annular Portion 903** | 1663.79 mm |
| Shots on track | 666 |
| Testing time on track | 15.98 s |
| Changeover to next track | 10.00 s |
| **Annular Portion 904** | 1301.88 mm |
| Shots on track | 521 |
| Testing time on track | 12.50 s |
| Changeover to next track | 10.00 s |
| **Annular Portion 905** | 939.96 mm |
| Shots on track | 376 |
| Testing time on track | 12.00 s |
| Changeover to next track | 10.00 s |
| **Hub Portion** | 860.80 mm |
| Shots on track | 345 |
| Testing time on track | 12.00 s |

**TABLE 3 - FIG. 9B Exemplary Analysis**

| | |
|---|---|
| **Duration of step table** | 0.50 ms |

| **Max Circumference** | 2387.61 mm |
|---|---|
| Shots on track | 478 |
| Testing time on track | 12.00 s |
| Changeover to next track | 5.00 s |
| **Min Circumference** | 848.23 mm |
| Shots on track | 170 |
| Testing time on track | 12.00 s |
| Changeover to next track | 5.00 s |
| **Number of Tracks** | 49 |

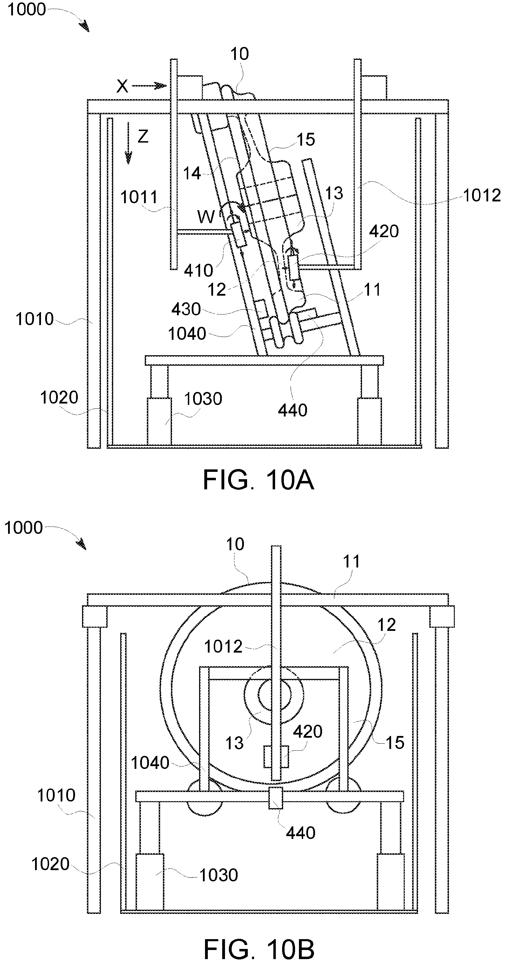

FIGS. 10A and 10B are a side cross-section view and a front cross-section view, respectively, of an exemplary inspection system 1000 for inspecting the web 12 of a rail wheel 10 with a pair of phased array probes 410, 420, with the rail wheel 10 and phased array probes 410, 420 supported by an exemplary gantry system 1010. The exemplary inspection system 1000 includes an immersion tank 1020 and a support plate 1030. An exemplary wheel support 1040 is configured to transport the rail wheel 10 in and out of the gantry system 1010 as well as rotate the rail wheel 10 during inspection. A first manipulator arm 1011 is configured to manipulate the first web phased array probe 410 to different locations and orientations to inspect the inside surface 14 of the web 12 and the hub 13, while a second manipulator arm 1012 is configured to manipulate the second web phased array probe 420 to different locations and orientations to inspect the outside surface 15 of the web 12 and the hub 13.

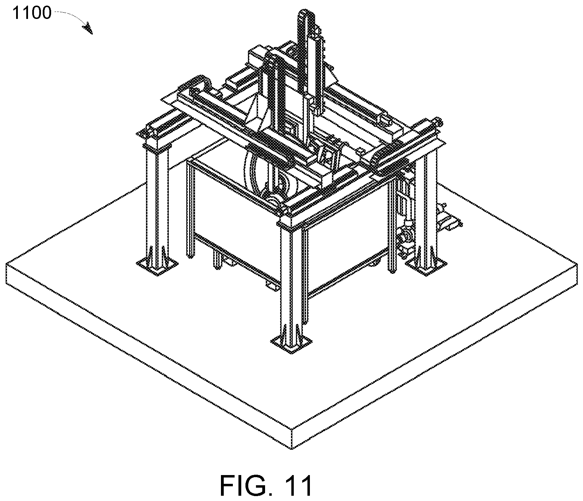

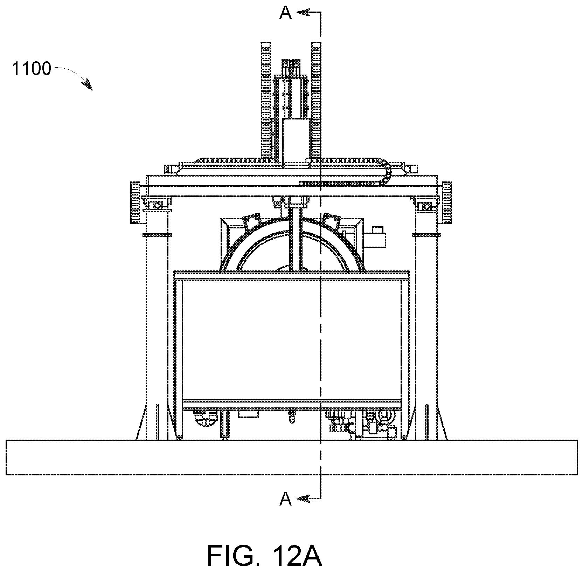

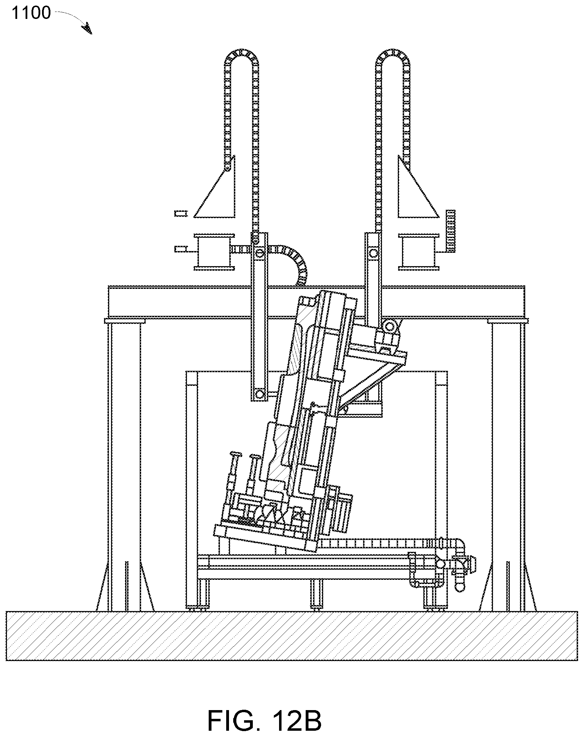

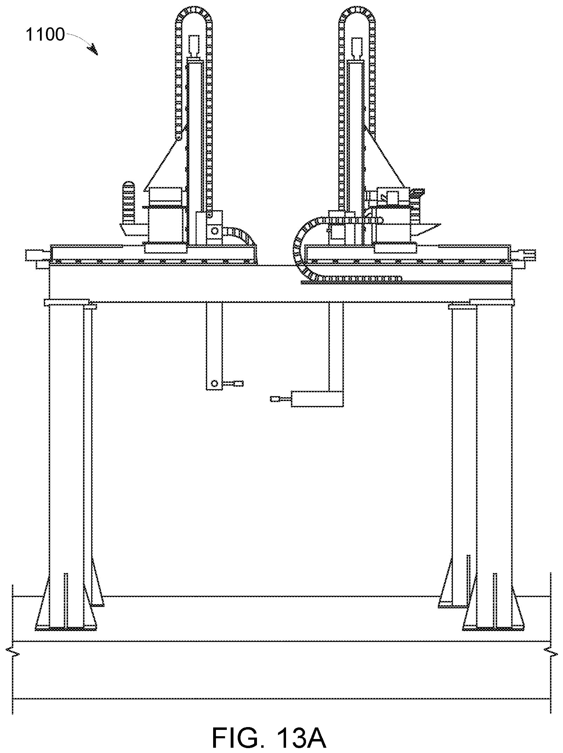

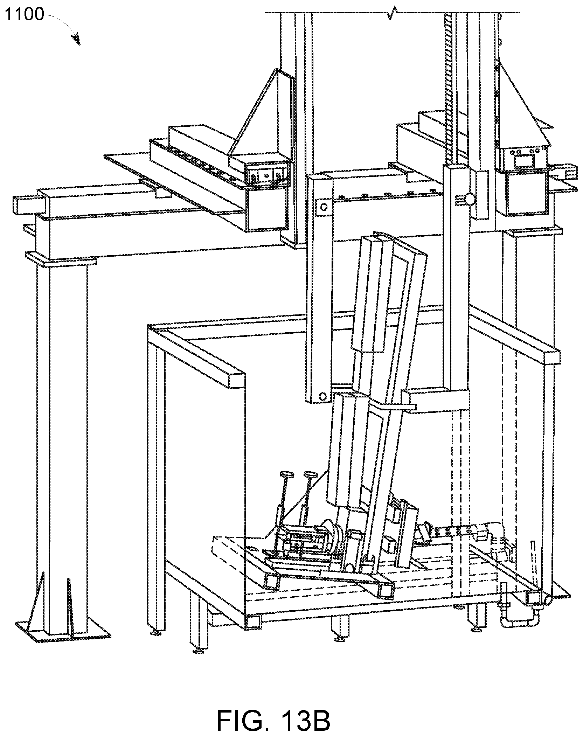

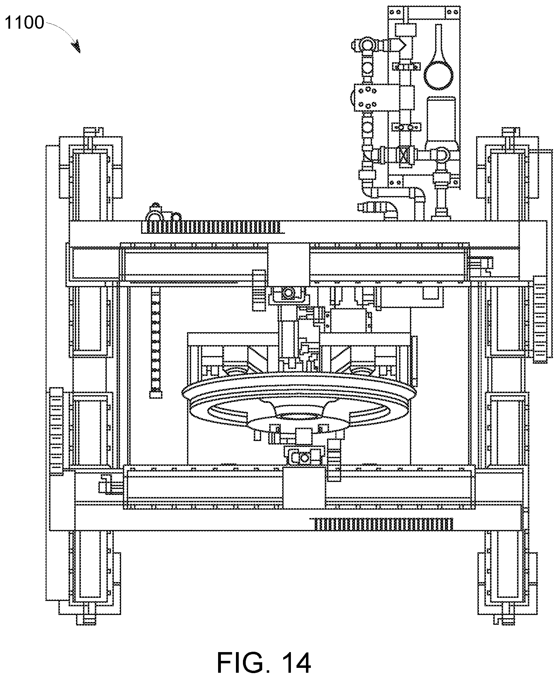

FIG. 11 is a perspective view of an exemplary inspection system 1100 for inspecting the web and hub of a rail wheel with a pair of phased array probes, with the rail wheel and phased array probes supported by an exemplary gantry system. FIGS. 12A and 12B are a side view and a cross-section view, respectively, of the exemplary inspection system 1100 for inspecting the web and hub of a rail wheel with a pair of phased array probes of FIG. 11. FIGS. 13A and 13B are a side view and side perspective view of the exemplary gantry system of FIG. 11 for inspecting the web and hub of a rail wheel with a pair of phased array probes. FIG. 14 is a top view of the exemplary inspection system for inspecting the web and hub of a rail wheel with a pair of phased array probes of FIG. 11.

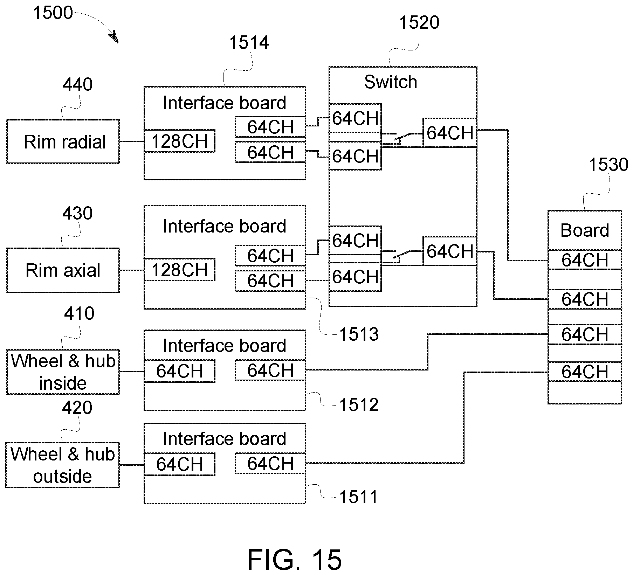

FIG. 15 is an exemplary circuit diagram of an exemplary inspection system 1500 for inspecting the web and hub of a rail wheel with a pair of web (and hub) phased array probes 410, 420. In the exemplary embodiment, each of the web phased array probes 410, 420 are connected to interface boards 1511, 1512, which are then connected to phased array boards 1530. Similarly, each of the rim phased array probes 430, 440 are connected to interface boards 1513, 1514, which are then connected to phased array boards 1530 through a switch 1520.

As mentioned above, an advantage that may be realized in the practice of some of the disclosed embodiments for inspecting the web and hub of a rail wheel with a phased array probe is reduced inspection times based on the reduced number of scans required to fully inspect the web of the rail wheel. In addition to reducing the inspection time, the disclosed embodiments will reduce the set up time for a new rail wheel (and web) geometry. In addition, any fine adjustments of the probe can be done automatically by acoustic beam steering rather than mechanical fine adjustments.

To the extent that the claims recite the phrase "at least one of" in reference to a plurality of elements, this is intended to mean at least one or more of the listed elements, and is not limited to at least one of each element. For example, "at least one of an element A, element B, and element C," is intended to indicate element A alone, or element B alone, or element C alone, or any combination thereof. "At least one of element A, element B, and element C" is not intended to be limited to at least one of an element A, at least one of an element B, and at least one of an element C.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A system (1000) for inspecting a rail wheel (10), the system comprising at least one phased array probe (410) for inspecting the rail wheel (10), the at least one phased array probe (410) being configured for inspecting, upon rotation of the rail wheel (10), multiple annular portions of the rail wheel (10), including a web portion (12), from multiple radial positions of the at least one phased array probe (410);
**characterized by** a pair of opposing phased array probes (410, 420) for inspecting opposite sides of the rail wheel (10), automated arms (1011, 1012) connected to the phased array probes for moving each of the opposing phased array probes (410, 420) along corresponding radial tracks with multiple radial positions and a gantry system (1010, 1040) for supporting and rotating the rail wheel (10).

2. The system of claim 1, wherein the opposing phased array probes (410, 420) are positioned asymmetrically with respect to the rail wheel (10).

3. The system of claim 1 or claim 2, wherein the automated arms are configured to move at least one phased array probe (410) to follow a track with the multiple radial positions (501, 502, 503).

4. The system of claim 3, wherein the automated arm (1011) is configured for translating the at least one phased array probe (410) along the track with the multiple radial positions (501, 502, 503) and rotating the at least one phased array probe (410) at a given one of the multiple radial positions (501, 502, 503).

5. The system of any preceding claim, wherein the at least one phased array probe (410) comprises multiple ultrasonic transducer elements and the system is configured to activate different groups of the multiple ultrasonic transducer elements to allow complete inspection of one of the multiple annular portions of the rail wheel (10) from a single one of the multiple radial positions (501, 502, 503) upon rotation of the rail wheel (10).

6. The system of any preceding claim, wherein the automated arms are configured to orientate the at least one phased array probe (410) for orientation normal to surfaces of the web portion (12) of the rail wheel (10)

7. The system of any preceding claim, further comprising an immersion tank (1020) for immersing the at least one phased array probe (410) and the rail wheel (10) for inspection in a liquid medium.

8. Use of the system of any preceding claim, wherein the rail wheel (10) comprises a hub portion (13) and the at least one phased array probe (410) is further configured to inspect the hub portion (13) of the rail wheel (10).

9. The system of any claim 2 to 7, further comprising an analysis device, the analysis device configured to receive data from the at least one phased array probe (410) and use the data to detect defects within the rail wheel (10).

10. A method for inspecting a rail wheel (10), the method comprising:
inspecting opposite sides of the rail wheel (10) with opposing phased array probes (410, 420);
moving each of the opposing phased array probes (410, 420) with automated arms along a corresponding radial track with multiple radial positions (501, 502, 503, 511, 512, 513); and
rotating the rail wheel (10) with a gantry system (1010) to inspect annular portions of the rail wheel (10), including a web portion (12), with the opposing phased array probes (410, 420), the annular portions corresponding to the multiple radial positions (501, 502, 503, 511, 512, 513).

11. The method of claim 10, further comprising positioning the opposing phased array probes (410, 420) asymmetrically with respect to the rail wheel (10) to inhibit interference between the opposing phased array probes (410, 420).

12. The method of claim 10 or claim 11, wherein each of the phased array probes (410, 420) comprises multiple ultrasonic transducer elements and the method further comprises activating different groups of the multiple ultrasonic transducer elements to allow complete inspection of one of the annular portions of the rail wheel (10) from a single one of the multiple radial positions (501, 502, 503, 511, 512, 513) during the rotating.

13. The method of any of claims 10 to 12, further comprising orienting the opposing phased array probes (410, 420) normal to surfaces of the web portion (12) of the rail wheel (10).

14. The method of any of claims 10 to 13, further comprising providing a liquid medium immersing the opposing phased array probes (410, 420) and the rail wheel.

## Patentansprüche

1. System (1000) zum Inspizieren eines Eisenbahnrads (10), wobei das System mindestens eine phasengesteuerte Phased-Array-Sonde (410) zum Inspizieren des Eisenbahnrads (10) umfasst, wobei die mindestens eine phasengesteuerte Phased-Array-Sonde (410) zum Inspizieren, bei Drehung des Eisenbahnrads (10), mehrerer ringförmiger Abschnitte des Eisenbahnrads (10), einschließlich eines Stegabschnitts (12), aus mehreren radialen Positionen der mindestens einen phasengesteuerten Phased-Array-Sonde (410), konfiguriert ist;
**gekennzeichnet durch** ein Paar gegenüberliegender phasengesteuerter Phased-Array-Sonden (410, 420) zum Inspizieren gegenüberliegender Seiten des Eisenbahnrads (10), automatisierte Arme (1011, 1012), die mit den phasengesteuerten Phased-Array-Sonden verbunden sind, um jede der gegenüberliegenden phasengesteuerten Phased-Array-Sonden (410, 420) entlang entsprechender radialer Spuren mit mehreren radialen Positionen zu bewegen, und ein Gantry-System (1010, 1040) zum Tragen und Drehen des Eisenbahnrads (10).

2. System nach Anspruch 1, wobei die gegenüberliegenden phasengesteuerten Phased-Array-Sonden (410, 420) in Bezug auf das Eisenbahnrad (10) asymmetrisch positioniert sind.

3. System nach Anspruch 1 oder Anspruch 2, wobei die automatisierten Arme konfiguriert sind, um mindestens eine phasengesteuerte Phased-Array-Sonde (410) zu bewegen, um einer Spur mit den mehreren radialen Positionen (501, 502, 503) zu folgen

4. System nach Anspruch 3, wobei der automatisierte Arm (1011) zum Übersetzen der mindestens einen phasengesteuerten Phased-Array-Sonde (410) entlang der Spur mit den mehreren radialen Positionen (501, 502, 503) und zum Drehen der mindestens einen phasengesteuerten Phased-Array-Sonde (410) an einer gegebenen der mehreren radialen Positionen (501, 502, 503) konfiguriert ist.

5. System nach einem der vorstehenden Ansprüche, wobei die mindestens eine phasengesteuerte Phased-Array-Sonde (410) mehrere Ultraschallwandlerelemente umfasst und das System konfiguriert ist, um unterschiedliche Gruppen der mehreren Ultraschallwandlerelemente zu aktivieren, um eine vollständige Inspektion eines der mehreren ringförmigen Abschnitte des Eisenbahnrads (10) aus einer einzelnen der mehreren radialen Positionen (501, 502, 503) bei Drehung des Eisenbahnrads (10) zu ermöglichen.

6. System nach einem der vorstehenden Ansprüche, wobei die automatisierten Arme konfiguriert sind, um die mindestens eine phasengesteuerte Phased-Array-Sonde (410) zur Ausrichtung senkrecht zu Oberflächen des Stegabschnittes (12) des Eisenbahnrads (10) auszurichten

7. System nach einem der vorstehenden Ansprüche, ferner umfassend eine Tauchwanne (1020) zum Eintauchen der mindestens einen phasengesteuerten Phased-Array-Sonde (410) und des Eisenbahnrads (10) zur Inspektion in einem flüssigen Medium.

8. Verwendung des Systems nach einem der vorstehenden Ansprüche, wobei das Eisenbahnrad (10) einen Nabenabschnitt (13) umfasst und die mindestens eine phasengesteuerte Phased-Array-Sonde (410) ferner konfiguriert ist, um den Nabenabschnitt (13) des Eisenbahnrads (10) zu inspizieren.

9. System nach Anspruch 2 bis 7, ferner umfassend eine Analysevorrichtung, wobei die Analysevorrichtung konfiguriert ist, um Daten aus der mindestens einen phasengesteuerten Phased-Array-Sonde (410) zu empfangen und die Daten zu verwenden, um Defekte innerhalb des Eisenbahnrads (10) zu erkennen.

10. Verfahren zum Inspizieren eines Eisenbahnrads (10), wobei das Verfahren umfasst:
Inspizieren von gegenüberliegenden Seiten des Eisenbahnrads (10) mit gegenüberliegenden phasengesteuerten Phased-Array-Sonden (410, 420);
Bewegen jeder der gegenüberliegenden phasengesteuerten Phased-Array-Sonden (410, 420) mit automatisierten Armen entlang einer entsprechenden radialen Spur mit mehreren radialen Positionen (501, 502, 503, 511, 512, 513); und Drehen des Eisenbahnrads (10) mit einem Gantry-System (1010), um ringförmige Abschnitte des Eisenbahnrads (10), einschließlich eines Stegabschnitts (12), mit den gegenüberliegenden phasengesteuerten Phased-Array-Sonden (410, 420) zu inspizieren, wobei die ringförmigen Abschnitte den mehreren radialen Positionen (501, 502, 503, 511, 512, 513) entsprechen.

11. Verfahren nach Anspruch 10, ferner umfassend das Positionieren der gegenüberliegenden phasengesteuerten Phased-Array-Sonden (410, 420) asymmetrisch in Bezug auf das Eisenbahnrad (10), um Interferenz zwischen den gegenüberliegenden phasengesteuerten Phased-Array-Sonden (410, 420) zu verhindern.

12. Verfahren nach Anspruch 10 oder Anspruch 11, wobei jede der phasengesteuerten Phased-Array-Sonden (410, 420) mehrere Ultraschallwandlerelemente umfasst und das Verfahren ferner das Aktivieren unterschiedlicher Gruppen der mehreren Ultraschallwandlerelemente umfasst, um eine vollständige Inspektion eines der ringförmigen Abschnitte des Eisenbahnrads (10) aus einer einzigen der mehreren radialen Positionen (501, 502, 503, 511, 512, 513) während des Drehens zu ermöglichen.

13. Verfahren nach einem der Ansprüche 10 bis 12, ferner umfassend das Ausrichten der gegenüberliegenden phasengesteuerten Phased-Array-Sonden (410, 420) senkrecht zu Oberflächen des Stegabschnitts (12) des Eisenbahnrads (10).

14. Verfahren nach einem der Ansprüche 10 bis 13, ferner umfassend das Bereitstellen eines flüssigen Mediums, in das die gegenüberliegenden phasengesteuerten Phased-Array-Sonden (410, 420) und das Eisenbahnrad eingetaucht werden.

## Revendications

1. Système (1000) pour inspecter une roue ferroviaire (10), le système comprenant au moins une sonde à réseau piloté en phase (410) pour inspecter la roue ferroviaire (10), l'au moins une sonde à réseau piloté en phase (410) étant configurée pour inspecter, lors d'une rotation de la roue ferroviaire (10), de multiples parties annulaires de la roue ferroviaire (10), incluant une partie d'âme (12), à partir de multiples positions radiales de l'au moins une sonde à réseau piloté en phase (410) ;
**caractérisé par** une paire de sondes à réseau piloté en phase opposées (410, 420) pour inspecter des côtés opposés de la roue ferroviaire (10), des bras automatisés (1011, 1012) connectés aux sondes à réseau piloté en phase pour déplacer chacune des sondes à réseau piloté en phase opposées (410, 420) le long de pistes radiales correspondantes avec de multiples positions radiales et un système de portique (1010, 1040) pour supporter et mettre en rotation la roue ferroviaire (10).

2. Système selon la revendication 1, dans lequel les sondes à réseau piloté en phase opposées (410, 420) sont positionnées asymétriquement par rapport à la roue ferroviaire (10).

3. Système selon la revendication 1 ou la revendication 2, dans lequel les bras automatisés sont configurés pour déplacer au moins une sonde à réseau piloté en phase (410) pour suivre une piste avec les multiples positions radiales (501, 502, 503)

4. Système selon la revendication 3, dans lequel le bras automatisé (1011) est configuré pour déplacer par translation l'au moins une sonde à réseau piloté en phase (410) le long de la piste avec les multiples positions radiales (501, 502, 503) et mettre en rotation l'au moins une sonde à réseau piloté en phase (410) à une position donnée des multiples positions radiales (501, 502, 503).

5. Système selon une quelconque revendication précédente, dans lequel l'au moins une sonde à réseau piloté en phase (410) comprend de multiples éléments transducteurs ultrasoniques et le système est configuré pour activer différents groupes des multiples éléments transducteurs ultrasoniques pour permettre une inspection complète d'une des multiples parties annulaires de la roue ferroviaire (10) à partir d'une seule des multiples positions radiales (501, 502, 503) lors d'une rotation de la roue ferroviaire (10).

6. Système selon une quelconque revendication précédente, dans lequel les bras automatisés sont configurés pour orienter l'au moins une sonde à réseau piloté en phase (410) pour une orientation perpendiculaire à des surfaces de la partie d'âme (12) de la roue ferroviaire (10)

7. Système selon une quelconque revendication précédente, comprenant en outre une cuve d'immersion (1020) pour immerger l'au moins une sonde à réseau piloté en phase (410) et la roue ferroviaire (10) pour une inspection dans un milieu liquide.

8. Utilisation du système selon une quelconque revendication précédente, dans laquelle la roue ferroviaire (10) comprend une partie de moyeu (13) et l'au moins une sonde à réseau piloté en phase (410) est configurée en outre pour inspecter la partie de moyeu (13) de la roue ferroviaire (10).

9. Système selon l'une quelconque revendication 2 à 7, comprenant en outre un dispositif d'analyse, le dispositif d'analyse configuré pour recevoir des données provenant de l'au moins une sonde à réseau piloté en phase (410) et utiliser les données pour détecter des défauts au sein de la roue ferroviaire (10).

10. Procédé pour inspecter une roue ferroviaire (10), le procédé comprenant :
l'inspection de côtés opposés de la roue ferroviaire (10) avec des sondes à réseau piloté en phase opposées (410, 420) ;
le déplacement de chacune des sondes à réseau piloté en phase opposées (410, 420) avec des bras automatisés le long d'une piste radiale correspondante avec de multiples positions radiales (501, 502, 503, 511, 512, 513) ; et la rotation de la roue ferroviaire (10) avec un système de portique (1010) pour inspecter des parties annulaires de la roue ferroviaire (10), incluant une partie d'âme (12), avec les sondes à réseau piloté en phase opposées (410, 420), les parties annulaires correspondant aux multiples positions radiales (501, 502, 503, 511, 512, 513).

11. Procédé selon la revendication 10, comprenant en outre le positionnement asymétrique des sondes à réseau piloté en phase opposées (410, 420) par rapport à la roue ferroviaire (10) pour inhiber une interférence entre les sondes à réseau piloté en phase opposées (410, 420).

12. Procédé selon la revendication 10 ou la revendication 11, dans lequel chacune des sondes à réseau piloté en phase (410, 420) comprend de multiples éléments transducteurs ultrasoniques et le procédé comprend en outre l'activation de différents groupes des multiples éléments transducteurs ultrasoniques pour permettre une inspection complète d'une des parties annulaires de la roue ferroviaire (10) à partir d'une seule des multiples positions radiales (501, 502, 503, 511, 512, 513) pendant la rotation.

13. Procédé selon l'une quelconque des revendications 10 à 12, comprenant en outre l'orientation des sondes à réseau piloté en phase opposées (410, 420) perpendiculaire à des surfaces de la partie d'âme (12) de la roue ferroviaire (10).

14. Procédé selon l'une quelconque des revendications 10 à 13, comprenant en outre la fourniture d'un milieu liquide immergeant les sondes à réseau piloté en phase opposées (410, 420) et la roue ferroviaire.
